# EUROPÄISCHE PATENTSCHRIFT

(11) **EP 0 622 559 B1**
(45) Veröffentlichungstag und Bekanntmachung des Hinweises auf die Patenterteilung: **12.06.1996**
(21) Anmeldenummer: 93119843.6
(22) Anmeldetag: 09.12.1993
(51) Int. Cl.: F16D 13/75, F16D 65/60

(54) **Reibungskupplung mit automatischem Verschleissausgleich**
Friction clutch with self adjuster
Embrayage à friction à rattrapage d'usure automatique

(30) Priorität: 29.04.1993 DE 4314024
(43) Veröffentlichungstag der Anmeldung: 02.11.1994
(73) Patentinhaber: FICHTEL & SACHS AG, D-97424 Schweinfurt (DE)
(72) Erfinder: Weidinger, Reinhold, D-97509 Unterspiesheim (DE)

(56) Entgegenhaltungen:
- DE-A- 2 303 618
- DE-A- 2 916 755
- DE-A- 3 323 995
- DE-A- 3 420 537
- DE-A- 3 518 781
- DE-C- 2 920 932
- FR-A- 2 599 446
- FR-A- 2 606 477
- US-A- 4 099 604
- US-A- 5 069 322
- US-A- 5 090 536
- US-A- 5 186 298

## Beschreibung

Die Erfindung bezieht sich auf eine Reibungskupplung gemäß dem Oberbegriff des Hauptanspruches.

Eine solche Reibungskupplung ist beispielsweise durch die deutsche Patentschrift 29 20 932 bekannt. Bei der bekannten Reibungskupplung bestehen die Bauteile des automatischen Verschleißausgleichs aus einem Ringelement, welches an einem Führungsdurchmesser der Anpreßplatte konzentrisch zur Drehachse geführt ist und welches mit umfangsmäßig verlaufenden Schrägflächen an entsprechenden Gegenschrägflächen der Anpreßplatte anliegt. Über eine Zugfeder wird das Ringelement gegenüber der Anpreßplatte umfangsmäßig kraftbeaufschlagt, dergestalt, daß das Ringelement infolge Relativverdrehung zur Anpreßplatte eine Abstandsvergrößerung zu dieser Anpreßplatte durchführen möchte. Auf der der Anpreßplatte abgewandten Seite des Ringelements liegt die Membranfeder auf. Bei Verschleiß der Reibbeläge der Kupplungsscheibe und beim Abheben der Membranfeder vom Ringelement wird dieses durch die Feder in den entstehenden Spalt hinein verdreht und so der Verschleißausgleich hergestellt. Die Membranfeder bleibt daher auch über den gesamten Verschleißweg in ihrer relativen Stellung zum Kupplungsgehäuse konstant, so daß auch die Kraftverhältnisse der Membranfeder erhalten bleiben. Die Ausführung nach dem Stand der Technik ist ziemlich aufwendig, da eine exakte Bearbeitung der Anpreßplatte nötig ist sowie ein kompliziertes Ringelement verwendet werden muß.

Es ist daher Aufgabe der vorliegenden Erfindung, eine Reibungskupplung mit automatischem Verschleißausgleich zu erstellen, die preiswert und einfach herstellbar ist und die leicht montiert werden kann.

Erfindungsgemäß wird diese Aufgabe durch das Kennzeichen des Hauptanspruches gelöst. Durch die Aufteilung des Ringelementes in zwei axial hintereinander angeordnete Ringe und durch die Anordnung der die Steigung bewirkenden Teilflächen in den einander zugekehrten Bereichen der beiden Ringe ist es möglich, daß beide Ringe nach axial außen hin, also einmal zur Anpreßplatte und einmal zur Membranfeder, mit einer einfachen umlaufenden Kante versehen werden können, wobei auch die Anpreßplatte mit einer entsprechenden Kante versehen werden kann, was die Herstellung wesentlich vereinfacht. Durch die Anordnung der Federeinrichtung zwischen den beiden Ringen ist es möglich, daß die beiden Ringe als Einheit leicht an der Anpreßplatte verbaut werden können ohne daß an eine umfangsmäßig exakte Zuordnung zwischen den Ringen und der Anpreßplatte gedacht werden muß.

Nach einem weiteren Merkmal der Erfindung ist es vorteilhaft, daß die Teilflächen der beiden Ringe jeweils kontinuierlich verlaufen entsprechend der vorgegebenen Steigung. Eine solche Ausführung ist besonders preiswert herstellbar.

Es ist jedoch auch ohne weiteres möglich, die Teilflächen der beiden Ringe aus einzelnen jeweils parallel zu einer Ebene senkrecht zur Drehachse stufenartig verlaufenden Teilstücken herzustellen, die jeweils mit einem axialen Absatz versehen sind. Eine solche Ausbildung hat den Vorteil, daß weder durch die Federeinrichtung noch durch die Anpreßkraft der Membranfeder eine umfangsmäßig gerichtete Kraftkomponente entsteht, die die beiden Ringe in die eine oder die andere Drehrichtung belastet. Bei einer solchen Ausführung mit Teilflächen und jeweils einem Absatz wird die Verstellwirkung nach aufgetretenem Belagverschleiß dadurch bewirkt, daß bei Kraftentlastung durch die Membranfeder während des Ausrückvorgangs die Vibrationen der Brennkraftmaschine dafür sorgen, daß die Teilflächen über den jeweiligen Absatz hinweg gelüftet werden können, so daß eine Relativverdrehung der beiden Ringe möglich wird. Die einzelnen Absätze sind dabei in einer Größenordnung von etwa 0,2 mm gehalten.

Es wird weiterhin vorgeschlagen, daß die Federeinrichtung aus wenigstens einer Zugfeder besteht, die im wesentlichen tangential und an der Innenseite der beiden Ringe verläuft und die mit einem Ende in eine Öffnung des einen Ringes und mit dem anderen Ende in eine Öffnung des anderen Ringes eingehängt ist. Eine solche Ausbildung kann leicht vormontiert werden und dann in die Anpreßplatte eingesetzt werden.

Eine besonders einfach herzustellende und preiswerte Lösung ist darin zu sehen, daß die beiden Ringe aus Blechstreifen hergestellt sind. Solche Blechstreifen bringen einmal einen sehr geringen Abfall beim Herstellungsverfahren (vorzugsweise stanzen) und können anschließend leicht zu einem Ring gebogen werden.

Die so gebogenen Blechringe können dabei umfangsmäßig geschlossen ausgeführt werden (beispielweise durch Verschweißen), sie können jedoch auch umfangsmäßig offen ausgeführt sein und einen Spalt aufweisen. Eine solche Ausführung ist besonders einfach in der Herstellung.

Die Erfindung wird anschließend an Hand von Ausführungsbeispielen näher erläutert. Es zeigen im einzelnen:
- Fig. 1: die obere Hälfte eines Axialschnittes durch eine komplette Reibungskupplung;
- Fig. 2: die obere Hälfte einer ähnlichen Konstruktion in Teilschnitt;
- Fig. 3: die Ansicht "B" von zwei verschiedenen Ringausführungen von radial innen her.

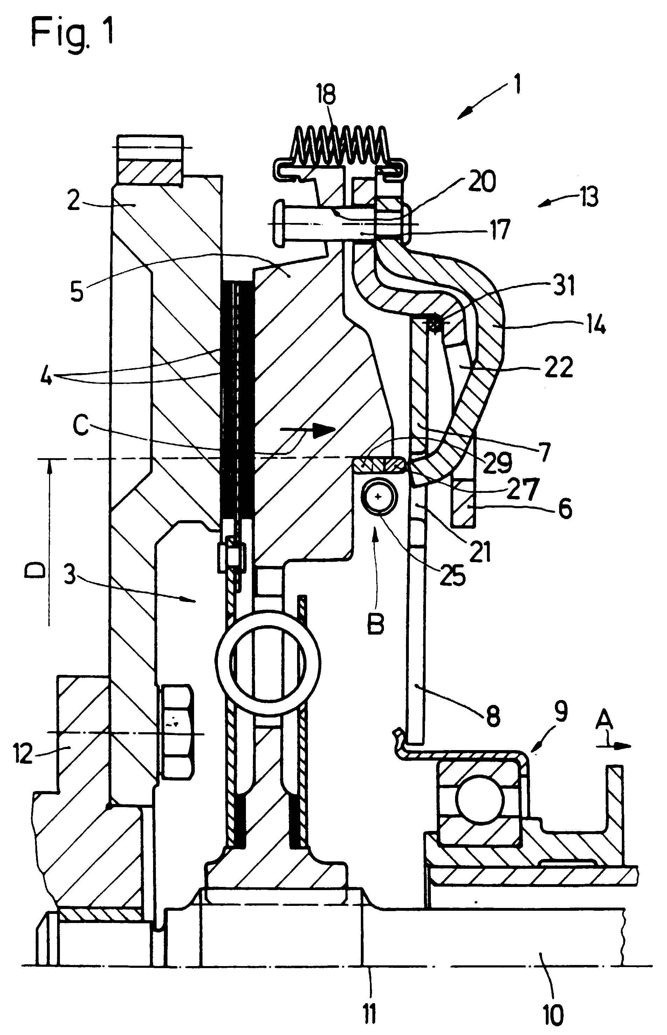

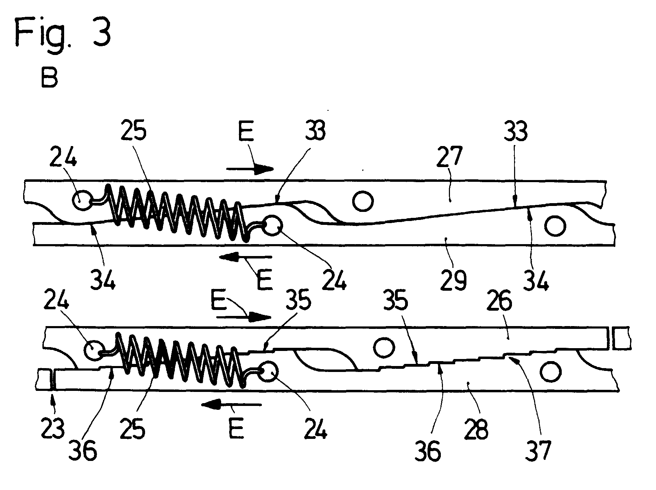

Fig. 1 zeigt eine Reibungskupplung 1 mit einem Schwungrad 2, welches an der Kurbelwelle 12 einer Brennkraftmaschine befestigt ist. Das Schwungrad 2 läuft zusammen mit der Kurbelwelle 12 um die Drehachse 11 um. Am Schwungrad 2 ist ein Kupplungsgehäuse 6 befestigt, welches die Kupplungsscheibe 3, die Anpreßplatte 5 und die Membranfeder 7 umfaßt. Die Anpreßplatte 5 ist in nicht näher dargestellter Weise drehfest aber axial verschiebbar am Kupplungsgehäuse 6 gelagert. Die Anordnung der Membranfeder 7 zeigt eine sogenannte gezogene Reibungskupplung, wobei sich die Membranfeder mit ihrem Außendurchmesser über einen Drahtring 31 am Kupplungsgehäuse 6 abstützt und in einem mittleren Bereich eine axial gerichtete Kraft auf die Anpreßplatte 5 ausübt zum Einspannen der Reibbeläge 4 der Kupplungsscheibe 3 zwischen sich und dem Schwungrad 2. Die Kupplungsscheibe 3 ist dabei drehfest aber axial verschiebbar auf der Getriebewelle 10 gelagert. Die Kraftübertragung im eingerückten Zustand der Reibungskupplung 1 erfolgt von der Membranfeder 7 her über ein Ringelement, welches an einem Führungsdurchmesser B der Anpreßplatte 5 radial geführt ist. Das Ringelement besteht aus den beiden Ringen 27 und 29, deren Ansicht "B" im oberen Teil der Fig. 3 zu sehen ist. Die beiden Ringe 27 und 29 sind wenigstens durch eine Zugfeder 25 gegeneinander in Umfangsrichtung mit einer Kraft beaufschlagt, die die beiden Ringe in Richtung der Pfeile E gegenseitig zu verdrehen sucht. Weiterhin ist aus Fig. 1 der Ausrücker 9 zu erkennen, der die Federzungen 8 der Membranfeder 7 hintergreift und der zum Ausrücken der Reibungskupplung in Richtung des Pfeiles A bewegt wird. Beim Lüften der Reibungskupplung 1 entsprechend der Bewegung A des Ausrückers 9 nach rechts wird die Membranfeder 7 um den Drahtring 31 gekippt und die Einspannung der Reibbeläge 4 gelöst. Durch eine an der Anpreßplatte 5 angreifende Lüftkraft entsprechend dem Pfeil C wird die Anpreßplatte über die beiden Ringe 27 und 29 in Anlage am mittleren Bereich der Membranfeder 7 gehalten und gleichzeitig liegt der Ring 27 am Betätigungshebel 14 eines Spielgebers 13 an. Der andere Ring 29 liegt in axialer Richtung gesehen an einem umlaufenden Bereich der Anpreßplatte 5 an. Beide Ringe 27 und 29 sind in radialer Richtung durch den Führungsdurchmesser D der Antriebsplatte 5 fixiert. Während des Ausrückvorgangs bewegt sich der Spielgeber 13, von dem mehrere am Umfang verteilt sind, zusammen mit der Anpreßplatte 5 nach rechts, wobei jeder Betätigungshebel 14 mit einem Schiebebolzen 17 versehen ist, dessen Achse parallel zur Drehachse 11 verläuft und der in einer Bohrung 20 die Anpreßplatte 5 durchdringt. In dieser Bohrung 20 ist der Schiebebolzen 17 während dieses Vorgangs durch Verkanten fixiert. Dieses Verkanten wird durch jeweils eine Zugfeder 18 unterstützt. Der Schiebebolzen 17 durchdringt dabei das Kupplungsgehäuse 6 mit ausreichend großem Spiel in einer entsprechenden Öffnung. Der Betätigungshebel 14 durchdringt ebenfalls radial innerhalb des Schiebebolzens 17 das Kupplungsgehäuse 6 in einer Öffnung 22 und die Membranfeder 7 in einer Öffnung 21. Er liegt mit seinem Ende direkt auf dem Ring 27 auf.

Beim anschließenden Einrückvorgang kann durch hohe Belastung ein Verschleiß an den Reibbelägen 4 auftreten, so daß die Membranfeder 7 die Anpreßplatte 5 in eine nähere Position zum Schwungrad 2 bringt. Die entsprechende Differenzbewegung kann der Betätigungshebel 14 nicht nachvollziehen, da er auf der Außenseite des Kupplungsgehäuses 6 entsprechend der Darstellung im Bereich des Schiebebolzens 17 zur Anlage kommt. Damit entsteht während des Einrückvorganges ein Spalt zwischen dem Ring 27 und dem radial inneren Bereich des Betätigungshebels 14. Die beiden Ringe 27 und 29 können jedoch durch die axiale Kraftbeaufschlagung der Membranfeder in diesem Zustand noch keinen Verschleißausgleich herbeiführen. Erst während des anschließenden Ausrückvorganges, wenn also die Einspannkraft der Membranfeder 7 aufgehoben ist und lediglich die relativ geringe Lüftkraft entsprechend dem Pfeil C zwischen Anpreßplatte 5 und Membranfeder 7 wirksam ist, kann der Spalt zwischen dem Ring 27 und dem Betätigungshebel 14 dadurch ausgeglichen werden, daß die Federeinrichtung, bestehend aus wenigstens einer Zugfeder 25, die beiden Ringe 27 und 29 entsprechend der Richtung der Pfeile E zueinander verdreht, so daß die Teilflächen 33 und 34, die eine Schräge aufweisen gegenüber einer Ebene senkrecht zur Drehachse 11, aneinander aufsteigen. Dabei ist festzuhalten, daß die Zugfeder 25 mit dem einen Ende in einer Öffnung 24 des einen Rings 27 eingehängt ist und mit dem anderen Ende in einer Öffnung 24 des anderen Ringes 29. Die beiden Ringe können sich dabei soweit verdrehen, bis der Spalt zwischen dem Ring 27 und dem Betätigungshebel 14 aufgebraucht ist. Damit befindet sich die Membranfeder 7 wieder in ihrer ursprünglichen räumlichen Zuordnung zum Kupplungsgehäuse 6 und es ist dafür Sorge getragen, daß über den gesamten Verschleißbereich der Reibbeläge 4 diese Zuordnung beibehalten wird. Damit sind die Kraftverhältnisse der Membranfeder 7 über die gesamte Lebensdauer erhalten.

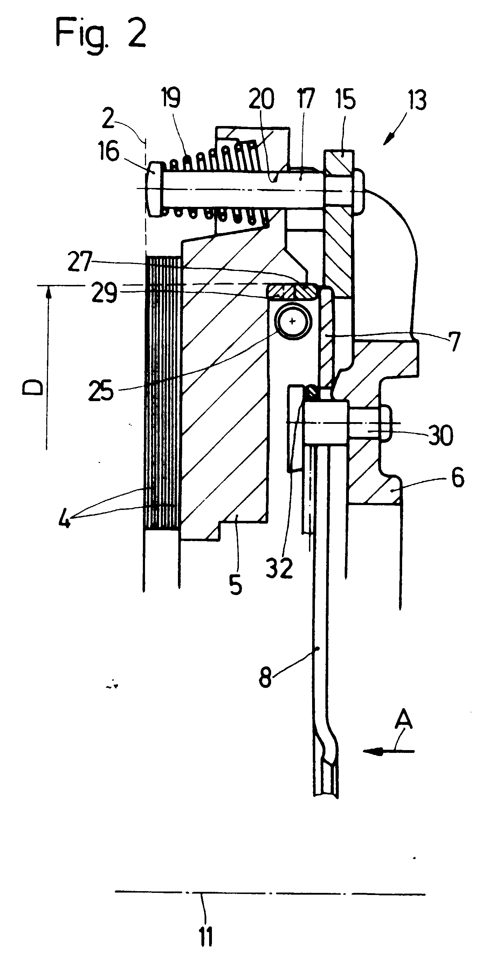

Fig. 2 zeigt eine etwas andere Konstruktion gegenüber Fig. 1 und zwar beziehen sich die Unterschiede einmal darauf, daß die Reibungskupplung eine sogenannte "gedrückte Konstruktion" aufweist, bei der die Membranfeder 7 mit ihrem Außendurchmesser auf die Anpreßplatte 5 einwirkt und in ihrem mittleren Durchmesser über Distanzbolzen 30 und wenigstens einem Drahtring 32 am Kupplungsgehäuse 6 fixiert ist und dort einen Kippkreis bildet. Weiterhin ist der Spielgeber 13 von anderer Konstruktion, in dem hier die Betätigungshebel 15 auf der der Anpreßplatte 5 abgewandten Seite der Membranfeder 7 aufliegen und die entsprechenden Schiebebolzen 17 durch die Bohrung 20 in der Anpreßplatte 5 so weit hindurchreichen, daß sie mit einem entsprechenden Kopf 16 am Schwungrad 2 zur Anlage kommen. Dabei ist eine Druckfeder 19 zwischen dem Kopf 16 und der Anpreßplatte 5 derart schräg angeordnet, daß der Schiebebolzen in der Bohrung 20 verkantet ist und eine axiale Relativbewegung nur dann stattfindet, wenn nach eingetretenem Verschleiß an den Reibbelägen 4 der Kopf 16 am Schwungrad 2 zur Anlage kommt, bevor die Anpreßplatte 5 ihre eingerückte Stellung eingenommen hat.

### Die Funktion ist nun folgende:

Zum Einleiten eines Ausrückvorganges wird über den hier nicht dargestellten Ausrücker eine Kraft in Richtung des Pfeiles A auf die Federzungen 8 der Membranfeder 7 ausgeübt. Dadurch schwenkt die Membranfeder 7 um ihre Einspannstelle am Kupplungsgehäuse 6, so daß sie mit ihrem Außendurchmesser vom Schwungrad 2 wegbewegt wird. Sie lüftet dabei die Anpreßplatte 5 zwangsweise über die Betätigungshebel 15 und die Schiebebolzen 17, die in der Bohrung 20 verkantet sind. Die beiden Ringe 27 und 29 werden durch die Federeinrichtung mit den Zugfedern 25 in dauernder Anlage, einmal an der Anpreßplatte 5 und zum anderen an der Membranfeder 7 gehalten. Beim nachfolgenden Einrückvorgang mit entsprechendem Verschleiß der Reibbeläge 4 wird die Anpreßplatte 5 durch die Kraft der Membranfeder 7 unter Zwischenschaltung der beiden Ringe 27 und 29 in die neue Position näher am Schwungrad 2 gebracht. Die Spielgeber mit den Betätigungshebeln 15 können dieser Bewegung nicht folgen, da die Köpfe 16 der Schiebebolzen 17 noch vorher am Schwungrad 2 zur Anlage kommen, so daß zwischen dem Außendurchmesser der Membranfeder 7 und den radial inneren Bereichen der Betätigungshebel 15 ein Spiel entsprechend dem vorher aufgetretenen Verschleiß entsteht. Beim nächsten Ausrückvorgang legt die Membranfeder 7 den Verschleißweg gegenüber den Betätigungshebeln 15 zurück ohne daß in diesem Bereich ein Ausrückvorgang bezüglich der Anpreßplatte 5 stattfindet. Dadurch ist den beiden Ringen 27 und 29 die Möglichkeit gegeben, durch die Zugfedern 25 eine gegenseitige Relativbewegung entsprechend den Pfeilen E in Fig. 3 zu vollziehen, so daß der beim vorangegangenen Einrückvorgang entstandene Verschleißweg durch die axiale Ausdehnung der beiden Ringe 27 und 29 aufgebraucht wird. Dadurch ist die relative Verschiebung der Anpreßplatte 5 gegenüber der Membranfeder 7 hergestellt.

In Fig. 3 sind zwei verschiedene Ausführungsformen der Ringe wiedergegeben. Wie bereits erwähnt, sind die Ringe 27 und 29 in den einander zugekehrten Bereichen mit Teilflächen 33 bzw. 34 versehen, die umfangsmäßig gegenüber einer Ebene senkrecht zur Drehachse 11 schräg angestellt sind. Bei Wegfall der Kraftbeaufschlagung zwischen Membranfeder 7 und der Anpreßplatte 5 können die beiden Ringe 27 und 29 durch die Kraft der Zugfedern 25 derart in Richtung der Pfeile E gegeneinander verdreht werden, daß die Teilflächen 33 und 34 aufeinander aufsteigen und die beiden Ringe somit einen entsprechend dem Verschleißweg größeren axialen Bauraum einnehmen. Dabei ist in der unteren Darstellung von Fig. 3 eine Variante dargestellt, bei welcher die Ringe 26 bzw. 28 in den einander zugekehrten Bereichen mit Teilflächen 35 bzw. 36 versehen sind, die jeweils parallel zu einer Ebene senkrecht durch die Drehachse verlaufen und die stufenförmig aneinander gereiht eine Schräge bilden, wobei jeweils von der einen zur nächsten Teilfläche ein axialer Absatz 37 vorgesehen ist. Diese Konstruktion ist dadurch funktionsfähig, daß von der Kurbelwelle der Brennkraftmaschine her Schwingungen in die gesamte Kupplung eingeleitet werden, die es erlauben, bei einem Verschleiß, der größer ist als die vorgesehenen Absätze 37, eine Relativbewegung der beiden Ringe 26 und 28 zueinander in Richtung der Pfeile E stattfinden kann, wenn die Reibungskupplung ausgerückt wird. Damit fällt nämlich die große Axialkraftbeaufschlagung zwischen der Membranfeder 7 und der Anpreßplatte 5 weg.

Die Ringe 26 und 28 sind im vorliegenden Fall umfangsmäßig offen ausgeführt (Spalt 23). Damit ist eine einfache Herstellung möglich. Die vorgebogenen Ringe können sich somit leicht am Führungsdurchmesser D der Anpreßplatte 5 anlegen.

## Patentansprüche

1. Reibungskupplung mit automatischem Verschleißausgleich innerhalb der am Schwungrad (2) einer Brennkraftmaschine befestigten Anpreßplatte (5), die im Kupplungsgehäuse (6) drehfest und axial verlagerbar angeordnet ist mit einer zwischen Kupplungsgehäuse (6) und Anpreßplatte (5) angeordneten Membranfeder (7), die sich am Kupplungsgehäuse (6) und an der Anpreßplatte (5) abstützt und die Anpreßplatte (5) in Richtung Schwungrad (2) belastet, mit einer Kupplungsscheibe (3) mit Reibbelägen (4) zwischen Anpreßplatte (5) und Schwungrad (2) und mit einer Nachstelleinrichtung zur Vergrößerung des Abstandes Membranfeder - Anpreßplatte ensprechend dem Verschleiß der Reibbeläge (4) in Form eines Ringelementes, welches an einem Führungsdurchmesser der Anpreßplatte (5) konzentrisch zur Drehachse (11) der Reibungskupplung geführt ist,
dadurch gekennzeichnet, daß das Ringelement aus zwei axial hintereinander angeordneten Ringen (26, 28; 27, 29) besteht, von denen sich axial einer an der Anpreßplatte (5) und einer an der Membranfeder (7) abstützt und beide in den einander zugekehrten Bereichen über umfangsmäßig eine oder mehrere Steigung (en) bewirkende Teilflächen (33, 34; 35, 36) abgestützt sind und wobei eine Federeinrichtung (25) vorgesehen ist, die beide Ringe (26,28; 27,29) gegeneinander verspannt und bei Verschleiß im Sinn einer axialen Bauraumvergrößerung gegeneinander verdreht.

2. Reibungskupplung nach Anspruch 1,
dadurch gekennzeichnet, daß die Teilflächen (33, 34) der beiden Ringe (27, 29) jeweils kontinuierlich verlaufen entsprechend der vorgegebenen Steigung.

3. Reibungskupplung nach Anspruch 1,
dadurch gekennzeichnet, daß die Teilflächen (35, 36) der beiden Ringe (26, 28) aus einzelnen jeweils parallel zu einer Ebene senkrecht zur Drehachse (11) stufenartig verlaufenden Teilstücken bestehen, die jeweils mit einem axialen Absatz (37) versehen sind.

4. Reibungskupplung nach einem oder mehreren der Ansprüche 1 - 3,
dadurch gekennzeichnet, daß die Federeinrichtung aus wenigstens einer Zugfeder (25) besteht, die im wesentlichen tangential und an der Innenseite der beiden Ringe (26, 28; 27, 29) verläuft und die mit einem Ende in eine Öffnung (24) des einen Ringes und mit dem anderen Ende in eine Öffnung (24) des anderen Ringes eingehängt ist.

5. Reibungskupplung nach Anspruch 4,
dadurch gekennzeichnet, daß beide Ringe (26, 28; 27, 29) aus Blechstreifen hergestellt sind.

6. Reibungskupplung nach Anspruch 5,
dadurch gekennzeichnet, daß beide Ringe (27, 29) umfangsmäßig geschlossen ausgeführt sind.

7. Reibungskupplung nach Anspruch 5,
dadurch gekennzeichnet, daß beide Ringe (26, 28) umfangsmäßig offen ausgeführt sind (Spalt 23).

## Claims

1. Friction clutch with automatic compensation for wear within the pressing plate (5) secured to the flywheel (2) of an internal combustion engine, arranged in the clutch housing (6) to rotate with it but to be axially displaceable, with a diaphragm spring (7) which is arranged between clutch housing (6) and pressing plate (5) and which abuts against the housing (6) and pressing plate (5) and urges the pressing plate (5) towards the flywheel (2), with a clutch plate (3) having friction linings (4) between pressing plate (5) and flywheel (2) and with an adjusting device for increasing the spacing between diaphragm spring and pressing plate to correspond to the wear of the friction linings (4) in the form of a ring element which is guided on a guide diameter of the pressing plate (5) concentric with the axis of rotation (11) of the clutch,
characterised in that the ring element comprises two rings (26, 28; 27, 29) arranged axially one beyond the other, of which axially one bears against the pressing plate (5) and the other against the spring (7) and both abut against one another in the axially facing regions through partial surfaces (33, 34; 35,36) forming circumferentially one or more ramps, and in which a spring device (25) is provided, pre-loading the two rings (26, 28; 27, 29) relative to one another and rotating them relative to one another in a sense such as to increase the space they take up on the occurrence of wear.

2. Friction clutch according to claim 1,
characterised in that the partial surfaces (33, 34) of the two rings (27, 29) each extend continuously corresponding to the predetermined inclination.

3. Friction clutch according to claim 1,
characterised in that the partial surfaces (35, 36) of the two rings (26, 28) comprise individual part-surfaces extending in steps, each parallel to a plane perpendicular to the axis of rotation (11) and each provided with an axial step or shoulder (37).

4. Friction clutch according to one or more of claims 1 - 3,
characterised in that the spring device comprises at least one tension spring (25) which extends substantially tangentially on the insides of the two rings (26, 28; 27, 29) and which has one end hooked into an opening (24) in the one ring and the other end hooked into an opening (24) in the other ring.

5. Friction clutch according to claim 4,
characterised in that the two rings (26, 28; 27, 29) are made from sheet metal strip.

6. Friction clutch according to claim 5,
characterised in that both rings (27, 29) are made circumferentially closed.

7. Friction clutch according to claim 5,
characterised in that both rings (26, 28) are made circumferentially open (gap 23).

## Revendications

1. Embrayage à friction à rattrapage d'usure automatique à l'intérieur du plateau de pression (5), lequel est coordonné au volant (2) d'un moteur à combustion interne et disposé solidaire en rotation et axialement déplaçable dans le carter d'embrayage (6), embrayage qui comprend un ressort-diaphragme (7) placé entre le carter d'embrayage (6) et le plateau de pression (5), s'appuyant sur le carter d'embrayage (6) et le plateau de pression (5) et chargeant ce plateau en direction du volant (2), un disque d'embrayage (3) pourvu de garnitures de friction (4) et placé entre le plateau de pression (5) et le volant (2), ainsi qu'un dispositif de rajustement pour agrandir la distance entre le ressort-diaphragme et le plateau de pression suivant l'usure des garnitures de friction (4), dispositif qui a la forme d'un élément annulaire guidé concentriquement à l'axe de rotation (11) de l'embrayage à friction sur un diamètre de guidage du plateau de pression (5),
caractérisé en ce que l'élément annulaire est composé de deux anneaux (26, 28; 27, 29) placés axialement l'un derrière l'autre, dont l'un s'appuie axialement sur le plateau de pression (5) et l'autre sur le ressort-diaphragme (7) et les deux anneaux s'appuient l'un sur l'autre par des faces partielles (33, 34; 35, 36) ménagées dans les parties des anneaux dirigées l'une vers l'autre, faces qui forment une ou plusieurs pentes en vue de l'écartement mutuel des anneaux, avec prévision d'un dispositif élastique (25) qui serre les deux anneaux (26, 28; 27, 29) l'un contre l'autre, et les tourne l'un par rapport à l'autre en cas d'usure, dans le sens de l'agrandissement de leur encombrement axial.

2. Embrayage à friction selon la revendication 1, caractérisé en ce que les faces partielles (33, 34) des deux anneaux (27, 29) ont chacune une allure continue correspondant à la pente préfixée.

3. Embrayage à friction selon la revendication 1, caractérisé en ce que les faces partielles (35, 36) des deux anneaux (26, 28) sont formées de tronçons ou facettes s'étendant à la façon de marches et orientés chacun parallèlement à un plan perpendiculaire à l'axe de rotation (11), chacun des tronçons ou facettes étant pourvu d'un gradin axial (37).

4. Embrayage à friction selon une ou plusieurs des revendications 1 - 3, caractérisé en ce que le dispositif élastique est formé d'au moins un ressort de traction (25) qui s'étend pour l'essentiel tangentiellement et sur le côté intérieur des deux anneaux (26, 28; 27, 29), ressort qui est accroché par une extrémité dans un trou (24) d'un anneau et par l'autre extrémité dans un trou (24) de l'autre anneau.

5. Embrayage à friction selon la revendication 4, caractérisé en ce que les deux anneaux (26, 28; 27, 29) sont fabriqués de bandes de tôle.

6. Embrayage à friction selon la revendication 5, caractérisé en ce que les deux anneaux (27, 29) sont fermés circonférentiellement.

7. Embrayage à friction selon la revendication 5, caractérisé en ce que les deux anneaux (26, 28) sont ouverts circonférentiellement (fente 23).
